# EUROPÄISCHE PATENTSCHRIFT

(11) **EP 3 311 469 B1**
(45) Veröffentlichungstag und Bekanntmachung des Hinweises auf die Patenterteilung: **10.07.2024**
(21) Anmeldenummer: 16725525.6
(22) Anmeldetag: 26.05.2016
(51) Int. Cl.: H02K 3/12, H02K 15/00, H02K 15/04, H02K 7/18

(54) **FORMSPULE, WICKLUNGSAUFBAU SOWIE STATOR EINES GENERATORS EINER WINDENERGIEANLAGE UND VERFAHREN ZUM HERSTELLEN EINES STATORS**
PRE-FORMED COIL, WINDING STRUCTURE, AND STATOR FOR A GENERATOR OF A WIND TURBINE AND METHOD FOR PRODUCING A STATOR
BOBINE PRÉFORMÉE, STRUCTURE DE BOBINAGES ET STATOR D'UN GÉNÉRATEUR D'UNE ÉOLIENNE AINSI QUE PROCÉDÉ DE FABRICATION D'UN STATOR

(30) Priorität: 19.06.2015 DE 102015211355
(43) Veröffentlichungstag der Anmeldung: 25.04.2018
(73) Patentinhaber: Wobben Properties GmbH, 26607 Aurich (DE)
(72) Erfinder: RÖER, Jochen, 27777 Ganderkesee (DE); WOLLGAM, Sven, 26603 Aurich (DE)
(74) Vertreter: Eisenführ Speiser
(86) Internationale Anmeldenummer: PCT/EP2016/061917
(87) Internationale Veröffentlichungsnummer: WO 2016/202549

(56) Entgegenhaltungen:
- EP-A1- 0 766 882
- EP-A1- 2 194 268
- EP-B1- 0 766 882
- WO-A1-2011/039818
- DE-B- 1 167 968
- JP-A- 2001 510 320
- JP-A- 2009 195 007
- JP-A- 2010 110 122
- JP-A- 2012 186 976
- JP-A- 2013 201 838
- JP-A- H0 851 750
- US-A- 3 980 910
- US-A1- 2005 189 833
- US-A1- 2013 200 743

## Beschreibung

Die Erfindung betrifft einen Wicklungsaufbau eines Stators eines Generators einer Windenergieanlage sowie einen Stator.

Es sind Statoren von Generatoren getriebeloser Windenergieanlagen bekannt, die mehrere Stränge mit jeweils mehreren Wicklungen aufweisen. Diese Wicklungen werden mit einem isolierten Draht, zum Beispiel aus Kupfer, erzeugt. Hierzu wird in die Nuten des Stators der Draht eines Strangs eingewickelt, sodass ein Strang aus einem durchgängigen Stück des Drahts hergestellt wird. Dieses Wickeln des Stators ist sehr aufwändig und muss sinnvollerweise von Hand erfolgen, um - insbesondere in den Biegestellen - die Unversehrtheit der Drähte sowie auch der Isolierung des Drahts schon während des Wickelns zu überwachen.

Außerdem ist aus US 2005/0189833 A1 eine Wicklungsstruktur eines Motors oder Generators bekannt, die durch Kombination mehrerer separater, unterschiedlich geformter, Stableiter gebildet wird. Diese Wicklungsstruktur wird anstelle einer konventionellen Wicklungsstruktur mit gewickeltem Draht eingesetzt. Die Wicklungsstruktur wird durch die Stableiter gebildet, indem die gegeneinander isolierten Stableiter in Spulennuten des Stators eingesetzt werden, wobei dann deren Stirnseiten über Stabverbinder verbunden werden.

Ferner sind Formspulen bekannt, die vorgefertigten Windungen eines leitenden Materials entsprechen und direkt in die Nuten eines Stators eingesetzt werden. Die Formspulen weisen weit über die Statornut hinausragende Anschlüsse auf, mit denen die einzelnen Formspulen durch Löten oder Schweißen miteinander verbunden werden, sodass sich die gewünschte elektrischer Verschaltung des gesamten Wicklungsaufbaus ergibt. Beispielsweise in EP 0 766 882 A1 sind derartige Formspulen für einen Stator sowie das Einsetzen derartiger Formspulen in den Stator offenbart.

Ferner sind Formspulen bekannt, die mittels U-förmigen leitenden Verbindern miteinander verbunden sind. Beispielsweise in JP 2012 186976 A sind derartige Formspulen für einen Stator sowie das Einsetzen derartiger Formspulen in den Stator offenbart.

Die Anschlüsse müssen aufgrund der hohen Hitzeentwicklung beim Löten weit von der Nut beabstandet sein, sodass die Formspule im Bereich der Nut nicht zu heiß wird und so zu Beschädigung des Stators, insbesondere einer Isolierung gegenüber dem Stator führt. Daher weisen derartige Statoren eine besonders hohe axiale Tiefe auf.

Das Deutsche Patent- und Markenamt hat in der prioritätsbegründenden deutschen Patentanmeldung die folgenden Dokumente recherchiert: Schmidt, W. [et al.]: "Umweltverträgliche Harzimprägnierung elektrischer Maschinen mittels Stromwärme", Tzscheutschler, R. [et al.]: "Technologie des Elektromaschinenbaus", Heilles, Franz: "Wicklungen elektrischer Maschinen" sowie Wiedemann, E. [et al.]: "Konstruktion elektrischer Maschinen".

Der Erfindung liegt somit die Aufgabe zugrunde, wenigstens eines der genannten Probleme anzugehen. Insbesondere soll eine Lösung vorgeschlagen werden, die weniger aufwändig als die Methode des Wickelns des Stators mit durchgehenden Strängen ist, die aber gleichzeitig keine übermäßige Tiefe eines Stators, wie im Stand der Technik bekannt, erfordert. Zumindest soll zu bisher bekannten Lösungen eine alternative Lösung vorgeschlagen werden.

Erfindungsgemäß wird eine Formspule eines Stators eines Generators einer getriebelosen Windenergieanlage vorgeschlagen, die einen elektrischen Leiter mit einem ersten und einem zweiten Anschluss aufweist. Die Anschlüsse dienen zum elektrischen Verbinden mit einer weiteren Formspule. Ferner weisen die Anschlüsse jeweils ein Gewinde auf, um die elektrischen Verbindungen mittels Schraubverbindung herzustellen, wobei leitende Verbinder (32) der Verbindungselemente eine U-Form aufweisen, wobei die Verbindungselemente (30) in Gruppen (60a, 60b), insbesondere in dreier Gruppen (60a, 60b), angeordnet sind und Enden der gleichen Seite von U-förmigen leitenden Verbindern einer Gruppe zwischen Enden beider Seiten von U-förmigen leitenden Verbindern der anderen Gruppe angeordnet und mit den Formspulen verbunden sind und somit Öffnungen der "U"'s der leitenden Verbinder aufeinanderfolgender Gruppen in Umlaufrichtung abwechselnd zum Zentrum des Generators oder vom Zentrum weg zeigen.

Die folgenden Ausführungsformen gehören zur Erfindung.

Gemäß einer Ausführungsform der Anschlüsse sind diese als Rundstücke ausgebildet.

Somit ist das Fertigen eines Stators eines Generators einer getriebelosen Windenergieanlage möglich, indem die einzelnen Formspulen in die Nuten des Stators eingesetzt und die elektrischen Verbindungen der einzelnen Formspulen durch Schraubverbindungen hergestellt werden. Eine Hitzeentwicklung durch Löten oder Schweißen, am kompletten Generator, beim Herstellen der elektrischen Verbindungen kann somit vermieden werden.

Daher können die Anschlüsse wesentlich dichter am Statorkörper angeordnet werden, ohne dass die Gefahr der Beschädigung des Stators, insbesondere einer Isolierung, besteht. Damit ist ein Stator realisierbar, der eine wesentlich geringere axiale Tiefe aufweist. Ferner ist der Stator durch einfaches Einlegen der Formspulen herstellbar, ohne dass ein aufwändiges Wickeln der Wicklungen erfolgen muss.

Vorzugsweise ist der Generator als Ringgenerator ausgebildet. Demnach sind die magnetisch aktiven Bereiche des Läufers und Stators, nämlich besonders die Blechpakete des Stators und Läufers, in einem ringförmigen Bereich um den Luftspalt angeordnet, der Läufer und Stator trennt. Dabei ist der Generator in einem inneren Bereich mit einem Radius von wenigstens 50 % des mittleren Luftspaltradius, frei von magnetisch wirksamen Bereichen.

Ein Ringgenerator kann auch dadurch definiert werden, dass die radiale Stärke der magnetisch aktiven Teilen, oder - anders ausgedrückt - des magnetisch aktiven Bereichs, nämlich die radiale Dicke vom Innenrand des Polrades bis zum Außenrand des Stators, bzw. vom Innenrand des Stators bis zum Außenrand des Läufers, im Falle eines Außenläufers, kleiner als der Luftspaltradius ist, insbesondere dass die radiale Stärke des magnetisch aktiven Bereichs des Generators weniger als 30%, insbesondere weniger als 25% des Luftspaltradius beträgt. Außerdem oder alternativ kann ein Ringgenerator dadurch definiert werden, dass ist die Tiefe, nämlich axiale Ausdehnung des Generators kleiner als der Luftspaltradius ist, insbesondere dass die Tiefe weniger als 30%, insbesondere weniger als 25% des Luftspaltradius beträgt. Außerdem oder alternativ ist ein Ringgenerator vielpolig ausgebildet und weist nämlich wenigstens 48, 96, insbesondere wenigstens 192 Rotorpole auf.

Gemäß einer weiteren Ausführungsform ist das Gewinde der Anschlüsse ein Innengewinde. Ein Innengewinde ist vorteilhaft, da die elektrischen Verbindungen der Formspulen mittels herkömmlicher Schrauben mit Außengewinde herstellbar sind. Außerdem ist ein Innengewinde gegenüber einem Außengewinde besser gegen äußere Einflüsse geschützt.

Gemäß einer weiteren Ausführungsform ist zumindest einer der Anschlüsse der Formspule bezogen auf eine Spulenlängsachse oder auf eine Parallele zur Spulenlängsachse abgewinkelt. Ferner ist der andere Anschluss bezogen auf eine Spulenlängsachse oder auf eine Parallele zur Spulenlängsachse nicht abgewinkelt. Das heißt, dass die beiden Anschlüsse bezogen auf eine Spulenlängsachse oder auf eine Parallele zur Spulenlängsachse einen unterschiedlichen Winkel aufweisen, der gemäß einer bevorzugten Ausführungsform im Bereich von 45 bis 90°, besonders bevorzugt im Bereich von 60 bis 80° liegt.

Eine Formspule weist gemäß einer Ausführungsform zwei im Wesentlichen parallele langgestreckte Schenkel auf, wobei jeder Schenkel eine Länge von mindestens 80 cm, mindestens 100 cm oder mindestens 120 cm aufweist. Ferner umfasst diese Ausführungsform der Formspule ein erstes Ende, an dem die Schenkel miteinander verbunden sind, und ein zweites Ende, an dem die Anschlüsse der Formspule vorgesehen sind.

Da in jeder Nut des Stators zwei Schenkel unterschiedlicher Formspulen vorgesehen sind, liegen die Anschlüsse der Formspulen nach Anordnung im Stator sehr eng beieinander. Durch die Abwinklung zumindest eines der Anschlüsse gegenüber dem anderen Anschluss ist jedoch eine elektrische Verbindung mit den Anschlüssen einfach herstellbar, da diese somit gut zugänglich sind. Eine elektrische Verbindung der Formspulen ist somit einfach herstellbar und es wird zudem der Gefahr eines Kurzschlusses zweier sich berührender Anschlüsse entgegengewirkt.

Gemäß einer weiteren Ausführungsform weist der Leiter mehrere Lagen, insbesondere zwei Lagen, auf. Diese mehreren Lagen sind jeweils mit einem Anschluss verbunden. Gemäß einer besonders bevorzugten Form ist jede Lage mit einer Kupferflachstange, einem Kupferband oder einem Kupferflachdraht gebildet. Bevorzugt ist ein Kupferflachdraht, der einen rechteckigen Querschnitt aufweist und eine Höhe von 0,8 bis 1cm und eine Breite von 1 bis 2 cm aufweist. Die mehreren Lagen des Leiters sind dann so übereinander angeordnet oder gestapelt, dass die Lagen mit einer ihrer breiteren Seite aufeinander zeigen.

Gemäß einer weiteren Ausführungsform weist die Formspule mehrere Windungen des Leiters auf. Gemäß einer besonders bevorzugten Ausführungsform umfasst die Formspule vier Windungen.

Gemäß einer weiteren Ausführungsform nimmt die Formspule mindestens drei unterschiedliche Formen an, wobei die Anschlüsse der unterschiedlichen Formen unterschiedliche Entfernungen zu einem geometrischen Mittelpunkt der Formspule aufweisen. Beim späteren Einsetzen der Formspulen in die Statornuten ist somit ein Verbinden der Formspulen in einfacher Weise möglich, da benachbarte erste Anschlüsse unterschiedliche Höhen aufweisen und benachbarte zweite Anschlüsse ebenfalls unterschiedliche Höhen aufweisen und damit in einfacher Weise zum Herstellen der elektrischen Verbindungen zugänglich sind.

Ein Leiter mit einer einfachen Lage muss vergleichsweise doppelt so dick sein wie ein Leiter mit zwei Lagen, um die gleichen elektrischen Eigenschaften wie der Leiter mit zwei Lagen zu erreichen. Der Einsatz eines vergleichsweise flachen Kupferflachdrahts ist somit zur Herstellung der Formspule in mehreren Lagen als Leiter mit mehreren Windungen vorteilhaft, da dieser vergleichsweise einfacherer biegbar ist. Eine Formspule mit mehreren Windungen ist somit besonders einfach herstellbar.

Gemäß einer weiteren Ausführungsform ist der Leiter oder jede Lage des Leiters der Formspule isoliert. Gemäß einer besonders bevorzugten Ausführungsform ist diese Isolierung eine Isolierung mittels Lack- und/oder Pulverbeschichtung. Eine Isolierung der Formspule ist somit bereits vor dem Herstellen der Formspule durch einfaches Aufbringen der Isolierschicht, z.B. eines Isolierlacks, auf den Leiter im ungeformten Zustand möglich, sodass eine sichere Isolierung einfach herstellbar ist.

Diese Isolierung dient - neben einer später in die Nuten eingelegten Nutenisolation, um die Formspule gegenüber dem ebenfalls leitenden Statormaterial zu isolieren. Somit kann auf eine komplette Umwicklung der Formspule zur Isolierung, die auch Isolierungswicklung genannt wird, vor dem Einsetzen der Formspulen in die Statornuten verzichtet werden. Eine Isolierungswicklung der Formspulen ist nachteilig, da die Isolierungswicklung die Wärmeabfuhr der Formspule im Betrieb behindert. Demnach ist eine Formspule ohne eine Umwicklung zur Isolierung, gemäß dem vorliegenden Ausführungsbeispiel, vorteilhaft in Bezug auf ihre Wärmeabfuhr.

Gemäß einer weiteren Ausführungsform sind die Anschlüsse mittels Löten oder Schwei-ßen mit dem Leiter verbunden. Die Verbindung des Leiters mit den Anschlüssen, die das Gewinde aufweisen, ist besonders vorteilhaft durch Induktionsschweißen hergestellt.

Durch Löten oder Schweißen der Anschlüsse am Leiter wird ein besonders geringer Übergangswiderstand der Verbindungsstelle erreicht. Ein Löten oder Schweißen der Anschlüsse an den Leiter ist auch möglich, solange die Formspule noch nicht in den Stator eingesetzt ist, da die Hitzeentwicklung beim Löten oder Schweißen den Stator nicht beschädigen kann.

Gemäß einer weiteren Ausführungsform weist der Leiter im Bereich der Verbindung mit zumindest einem Anschluss eine Isolierung aus glasfaserverstärktem Kunststoff auf. Dieser dient zur Isolierung mindestens eines Teils des Leiters und/oder eines Teils des Anschlusses.

Eine Formspule, deren Leiter zum Beispiel mittels Lack- und/oder Pulverbeschichtung isoliert ist, muss zum Verlöten oder Schweißen des Anschlusses im Bereich der Löt- oder Schweißstelle abisoliert werden. Dies geschieht zum Beispiel durch Abbrennen der Isolierung in diesem Bereich. Da die Gefahr eines Kurzschlusses in benachbarten Verbindungsbereichen benachbarter Leiter mit ihren Anschlüssen nach Anordnung der Formspulen in den Nuten des Stators durch das Abisolieren besteht, verhindert der glasfaserverstärkte Kunststoff einen derartigen Kurzschluss.

Gemäß einer weiteren Ausführungsform weist die Formspule im Bereich des Anschlusses einen Abstandshalter auf, der verhindert, dass sich benachbarte Anschlüsse im Betrieb des Stators durch Vibrationen des Stators berühren und somit ein Kurzschluss erfolgen könnte. Gemäß diesen Ausführungsbeispielen wird demnach Kurzschlüssen entgegengewirkt.

Gemäß einer weiteren Ausführungsform sind der Leiter und die Anschlüsse der Formspule mit Kupfer oder einer Kupferlegierung gefertigt. Kupfer oder eine Kupferlegierung weisen vorteilhafterweise einen geringen Widerstand auf, sodass möglichst ein hoher Anteil elektrischer Energie und möglichst ein geringer Anteil thermischer Energie mit dem Generator erzeugt wird.

Ferner umfasst die Erfindung einen Wicklungsaufbau eines Stators eines Generators einer Windenergieanlage. Ein Wicklungsaufbau entspricht der Gesamtheit der Formspulen mit ihren Verbindungen, die im Stator eines Generators einer Windenergieanlage zum Einsatz kommen. Der erfindungsgemäße Wicklungsaufbau umfasst mehrere Formspulen, insbesondere nach einer der vorhergehenden Ausführungsformen. Die Formspulen weisen jeweils einen elektrischen Leiter mit einem ersten und einem zweiten Anschluss auf. Die Anschlüsse umfassen jeweils ein Gewinde. Ferner umfasst der Wicklungsaufbau mehrere Verbindungselemente jeweils zum elektrischen Verbinden von zwei Anschlüssen zweier Formspulen durch Schraubverbindungen. Die Verbindungselemente können auch Verbindungslaschen genannt werden.

Durch die Gewinde ist daher ein Wicklungsaufbau für einen Stator realisierbar, der eine wesentlich geringere Tiefe als ein Wicklungsaufbau für einen Stator mit herkömmlichen Formspulen aufweist. Ferner ist der Stator durch einfaches Einlegen der Formspulen herstellbar, ohne dass ein aufwändiges Wickeln der Wicklungen erfolgen muss.

Gemäß einer weiteren Ausführungsform sind mehrere Formspulen in Serie geschaltet oder miteinander verbunden, und bilden somit einen Strang des Wicklungsaufbaus.

Gemäß einer weiteren Ausführungsform des Wicklungsaufbaus sind die Formspulen derart miteinander verbunden, dass der Wicklungsaufbau sechsphasig ist. Das heißt, die Formspulen sind in der Art miteinander verbunden, dass sechs Stränge vorgesehen sind. Hierbei sind ein erster und ein zweiter Strang einer ersten Phase, ein dritter und ein vierter Strang einer zweiten Phase und ein fünfter und ein sechster Strang einer dritten Phase zugeordnet.

Ferner ist der Wicklungsaufbau gemäß einer weiteren Ausführungsform in mehrere, insbesondere 2, 4, 6 oder 8, parallel geschaltete Abschnitte oder Segmente unterteilt. Jedes Segment enthält dann z.B. sechs Phasen, wobei gleiche Phasen der Segmente im Wicklungsaufbau parallel geschaltet oder verbunden sind. Dadurch erfolgt eine Reduzierung der maximal in die Stränge induzierten Spannung in Abhängigkeit der Segmentanzahl.

Gemäß der Erfindung sind die Anschlüsse zweier Formspulen mit Verbindungselementen verbunden. Die Verbindungselemente umfassen einen leitenden Verbinder, insbesondere eine Kupferflachstange oder ein Kupferband, das zwei Durchbrüche an seinen äußeren Enden aufweist. Die Enden sind gemäß einer weiteren Ausführungsform leicht abgewinkelt. Die Durchbrüche sind zum Beispiel durch Bohren hergestellt. Ferner umfasst das Verbindungselement zwei Schrauben, die insbesondere mit Messing hergestellt sind.

Demnach wird der leitende Verbinder mit seinen Durchbrüchen, also zum Beispiel Bohrlöchern, vor den Gewinden der zwei Anschlüsse von zwei unterschiedlichen Formspulen positioniert und die Schrauben durch die Durchbrüche durchgeführt und in das Gewinde des Anschlusses eingeschraubt. Eine elektrische Verbindung mit einem geringen Übergangswiderstand ist somit herstellbar.

Gemäß einer weiteren Ausführungsform des Wicklungsaufbaus weisen die Verbindungselemente sowie die Formspulen einen im Wesentlichen gleichen Wärmeausdehnungskoeffizienten auf. Hierdurch ist gewährleistet, dass trotz der im Betrieb des Wicklungsaufbaus erzeugten Wärme die Schraubverbindungen sicher halten.

Gemäß der Erfindung weisen die leitenden Verbinder eine U-Form auf. Die Formspulen sind in mehreren, insbesondere drei verschiedenen Formen, ausgestaltet. Verschiedene Formen der Formspulen weisen unterschiedlich lange Anschlussbereiche, insbesondere drei verschiedenen Längen jeweils beider Anschlüsse auf. Daher sind die Verbindungselemente in Gruppen, insbesondere in dreier Gruppen angeordnet. Gemäß der Erfindung sind dann die Enden der gleichen Seite von U-förmigen leitenden Verbindern einer Gruppe zwischen die Enden beider Seiten von U-förmigen leitenden Verbindern einer anderen Gruppe angeordnet oder mit den Formspulen verbunden. Somit zeigen die Öffnungen der "U"s der leitenden Verbinder aufeinanderfolgender Gruppen in Umlaufrichtung abwechselnd zum Zentrum des Generators oder vom Zentrum weg. Dies gilt einerseits für die leitenden Verbinder der ersten Anschlüsse der Formspule und andererseits auch für die leitenden Verbinder der zweiten Anschlüsse der Formspule.

In axialer Richtung kann der Stator daher mit noch geringerem Platzbedarf realisiert werden.

Ferner umfasst die Erfindung einen Stator eines Generators einer Windenergieanlage.

Der Stator umfasst mehrere umlaufende Nuten, wobei jeweils benachbarte Nuten einen im Wesentlichen gleichen Abstand aufweisen. In die Nuten sind Formspulen gemäß einer der vorhergehenden Ausführungsformen eingesetzt.

Durch die Verschaltung der Formspulen mittels der Anschlüsse, z.B. angelöteter Rundstücke, sowie der Verschraubung mit den Verbindungselementen, z.B. Verbindungslaschen, ist ein niedrigerer Aufbau im Bereich der Wickelköpfe gegenüber einer Verschaltung mit Schaltringen möglich.

Gemäß einer Ausführungsform ist der Stator mit Formspulen und einem Wicklungsaufbau nach einer der vorhergehenden Ausführungsformen ausgebildet.

Ferner ist ein Verfahren zum Herstellen eines Stators offenbart, das nicht zur Erfindung gehört. Die folgenden Ausführungsformen des Verfahrens gehören auch nicht zur Erfindung. Zur Herstellung werden die Formspulen beginnend von einer beliebigen ersten Nut eingesetzt, indem zunächst eine vorbestimmte Anzahl von einzusetzenden Formspulen nur teilweise in die Nuten eingesetzt oder vor den Nuten positioniert und erst vollständig zusammen mit einer vorbestimmten Anzahl der zuletzt einzusetzenden Formspulen in die entsprechenden Nuten eingesetzt werden.

Wie bereits oben erläutert wurde, werden die Schenkel zweier unterschiedlicher Formspulen in eine Nut eingesetzt. Hierdurch werden - in Umlaufrichtung des Stators gesehen - zwischen den beiden Schenkeln ein und derselben Formspule die Schenkel mehrerer anderer Formspulen eingesetzt. Demnach überschneiden sich also die Formspulen im in den Stator eingesetzten Zustand.

Durch diese Überschneidung wird herkömmlicherweise eine Formspule, die als erstes in die Statornuten eingesetzt wurde, zum Einführen der zuletzt einzuführenden Formspulen teilweise wieder aus der Nut herausgebogen. Durch das erfindungsgemäße Herstellungsverfahren ist dieses Herausbiegen nun nicht mehr nötig, sodass keine Beschädigung der Isolierung der Formspulen oder auch ein Verbiegen der Formspulen erfolgt.

Gemäß einer weiteren Ausführungsform des Verfahrens weisen die Formspulen jeweils zwei Anschlüsse mit jeweils einem Gewinde auf. Zwei Anschlüsse unterschiedlicher Formspulen werden dann jeweils mittels einer Kupferflachstange oder eines Kupferbands, das zwei Durchbrüche aufweist, verbunden, wobei hierzu zwei Schrauben durch die Durchbrüche in das Gewinde der Anschlüsse der Formspulen, insbesondere mit einem vorbestimmten Drehmoment, eingeschraubt werden. Eine sichere elektrische Verbindung der Formspulen erfolgt durch diese Verschraubung.

Gemäß einer weiteren Ausführungsform des Verfahrens werden die Anschlüsse und die Kupferflachstange oder das Kupferband im Bereich ihrer Kontaktflächen geschliffen und/oder poliert, bevor die Verbindung hergestellt wird. Gemäß einer weiteren Ausführungsform wird die Verbindung spätestens zwei Stunden nach dem Schleifen und/oder Polieren hergestellt.

Eine Korrosion der Kupferteile wird somit vermieden, da nach der Verbindung kein Sauerstoff mehr an die miteinander verbundenen Kupferteile gelangt. Daher ist eine elektrische Verbindung mit einem besonders geringen elektrischen Widerstand gewährleistet. Gemäß einer weiteren Ausführungsform des Verfahrens wird der komplettierte Stator vollständig in ein Harzbad oder flüssiges Harz eingetaucht und wieder aus dem Harz entfernt, um das am Stator anhaftende Harz aushärten zu lassen.

Hierdurch wird eine Isolierung aller leitenden Teile, die nicht bereits isoliert sind, geschaffen. Außerdem wird somit die gesamte Konstruktion in Bezug auf ihre Stabilität erhöht.

Weitere Ausführungsformen gehören zur Erfindung und ergeben sich aus den anhand der Zeichnungen näher erläuterten Ausführungsbeispielen. Die Ausführungsformen der Formspulen werden im Wicklungsaufbau der vorliegenden Erfindung verwendet. In der Zeichnung zeigt:
- Fig. 1: eine Windenergieanlage,
- Fig. 2: eine schematische Seitenansicht eines Generators,
- Fig. 3: eine erste Ansicht einer Formspule,
- Fig. 4: eine weitere Ansicht einer Formspule,
- Fig. 5: einen Ausschnitt einer perspektivischen Ansicht eines Stators,
- Fig. 6: einen Stator mit sechs eingelegten Formspulen,
- Fig. 7: eine Draufsicht eines Ausführungsbeispiels eines Generators,
- Fig. 8: eine Sicht vom Zentrum des Stators auf die Formspulen, die in einen Stator eingelegt sind und
- Fig. 9: eine weitere perspektivische Ansicht eines Stators

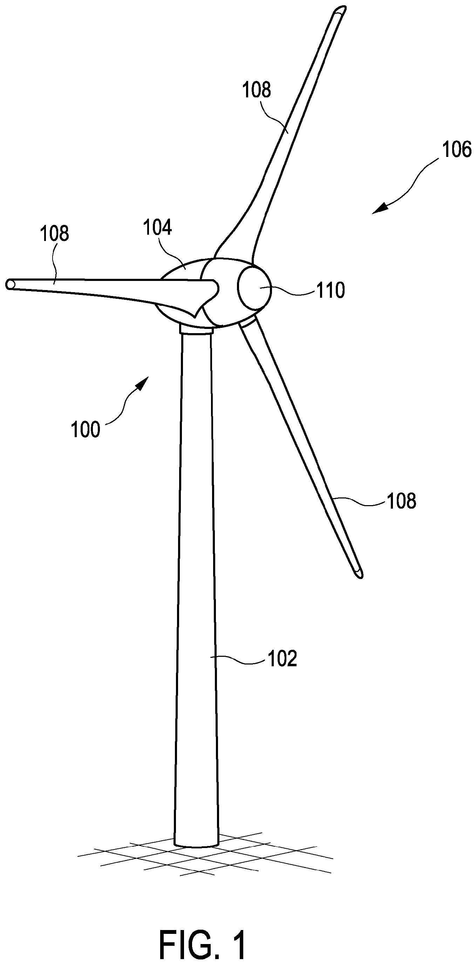

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 108b der jeweiligen Rotorblätter 108 verändert werden.

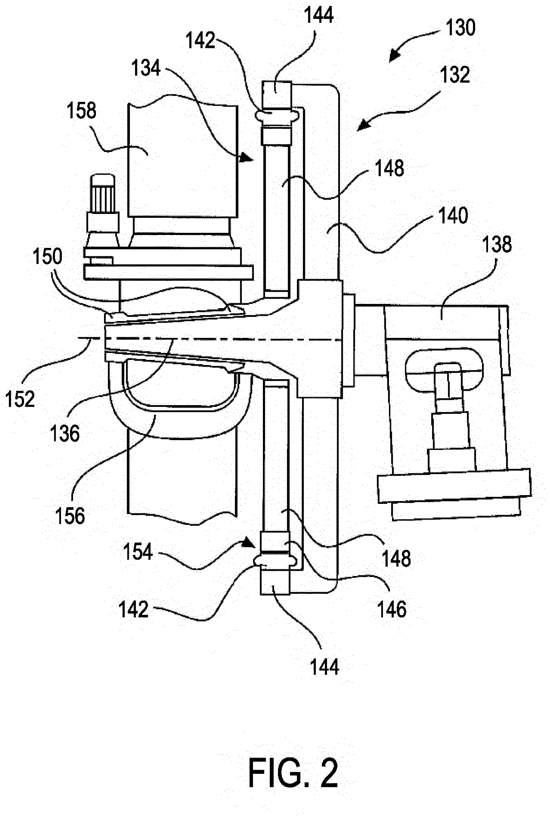

Fig. 2 zeigt einen Generator 130 schematisch in einer Seitenansicht. Er weist einen Stator 132 und einen dazu drehbar gelagerten elektrodynamischen Rotor 134 auf und ist mit seinem Stator 132 über einen Achszapfen 136 an einem Maschinenträger 138 befestigt. Der Stator 132 weist einen Statorträger 140 und Statorblechpakete 142 auf, die Statorpole des Generators 130 bilden und über einen Statorring 144 an dem Statorträger 140 befestigt sind.

Der elektrodynamische Rotor 134 weist Rotorpolschuhe 146 auf, die die Rotorpole bilden und über einen Rotorträger 148 und Lager 150 auf dem Achszapfen 136 drehbar um die Drehachse 152 gelagert sind. Die Statorblechpakete 142 und Rotorpolschuhe 146 trennt nur ein schmaler Luftspalt 154, der wenige mm dick ist, insbesondere weniger als 6 mm, aber einen Durchmesser von mehreren Metern aufweist, insbesondere mehr als 4 m.

Die Statorblechpakete 142 und die Rotorpolschuhe 146 bilden jeweils einen Ring und sind zusammen auch ringförmig, so dass der Generator 130 ein Ringgenerator ist. Bestimmungsgemäß dreht sich der elektrodynamische Rotor 134 des Generators 130 zusammen mit der Rotornabe 156 des aerodynamischen Rotors, von dem Ansätze von Rotorblättern 158 angedeutet sind.

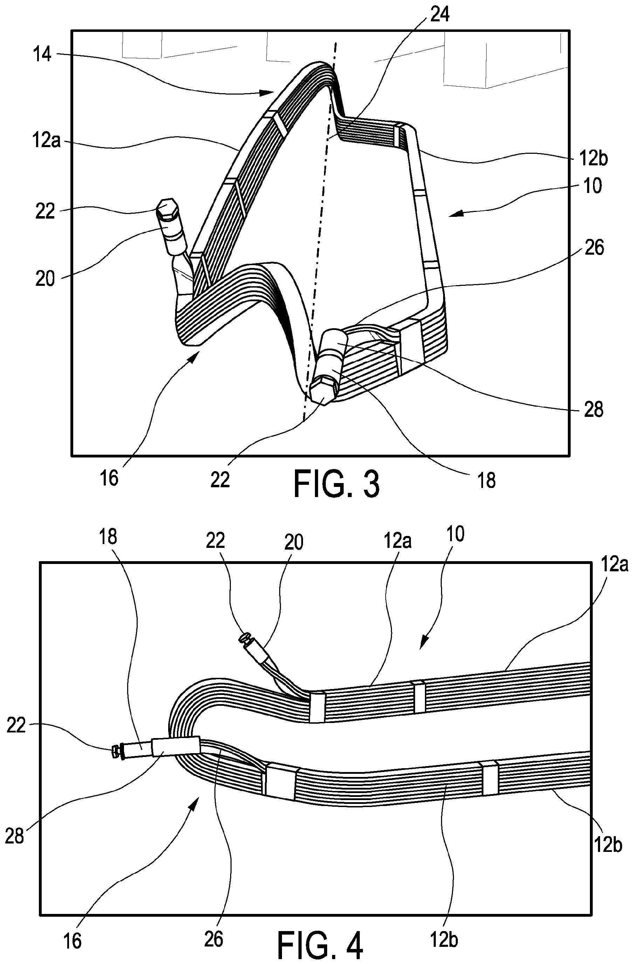

Fig. 3 zeigt eine Ansicht eines Ausführungsbeispiels einer Formspule 10. Die Formspule 10 weist zwei Schenkel 12a, 12b auf. Die Schenkel 12a, 12b verlaufen parallel zueinander und weisen eine Länge von mehr als 90 cm auf. Die beiden Schenkel 12a, 12b sind an einem ersten Ende 14 sowie an einem zweiten Ende 16 miteinander verbunden.

Das zweite Ende 16 der Formspule 10 weist einen ersten Anschluss 18 sowie einen zweiten Anschluss 20 auf. Die Anschlüsse 18, 20 weisen ein Innengewinde auf. In das Innengewinde der Anschlüsse 18, 20 sind Schrauben 22 eingedreht. Bezogen auf eine Spulenlängsachse 24 oder auf eine Parallele zur Spulenlängsachse 24 ist der zweite Anschluss 20 abgewinkelt und der erste Anschluss 18 nicht abgewinkelt.

Die Formspule 10 umfasst einen Leiter 26 und die Anschlüsse 18 und 20, die mit Kupfer gefertigt sind. Ferner sind die Schrauben 22 mit Messing gefertigt. Der Leiter 26 besteht aus zwei Lagen eines Flachdrahts, die in vier Windungen geformt sind. Das heißt, mit den beiden Anschlüssen 18, 20 sind zwei Lagen des Flachdrahts, der auch Kupferflachdraht genannt wird, verbunden.

Die Formspule 10 ist also mit diesen zwei Lagen und vier Windungen geformt, sodass im Bereich der Schenkel 12a, 12b und im Bereich des ersten Endes 14 acht Lagen des Kupferflachdrahts übereinander angeordnet oder gestapelt sind.

Aufgrund der herausgeführten Anschlüsse 18, 20 sind im Bereich des zweiten Endes 16 noch sechs Lagen übereinander angeordnet. Der Kupferflachdraht ist durch Lackieren isoliert. Im Verbindungsbereich des Leiters 26 mit den Anschlüssen 18, 20 ist die Isolierung jedoch entfernt worden, um die Anschlüsse 18, 20 durch Induktionsschweißen mit dem Leiter 26 zu verbinden. Im Bereich der Verbindung des ersten Anschlusses 18 mit dem Leiter 26 ist ein glasfaserverstärkter Kunststoff 28 angebracht, um diesen von der Isolierung des Leiters 26 befreiten Teil wieder zu isolieren.

Gemäß einem nicht dargestellten Ausführungsbeispiel ist ein derartiger glasfaserverstärkter Kunststoff auch im Verbindungsteil zwischen dem zweiten Anschluss 20 und dem Leiter 26 vorgesehen. Damit die Formspule 10 ihre Form bewahrt, sind die Lagen der Formspule in schmalen Bereichen umwickelt. Eine Isolationswicklung ist jedoch nicht vorhanden.

Fig. 4 zeigt eine weitere Ansicht der Formspule 10, wobei hier das zweite Ende 16 mit einem Teil der Schenkel 12a, 12b von der Seite dargestellt ist. Das in Fig. 4 dargestellte Ausführungsbeispiel der Formspule entspricht dem Ausführungsbeispiel der Formspule in Fig. 3.

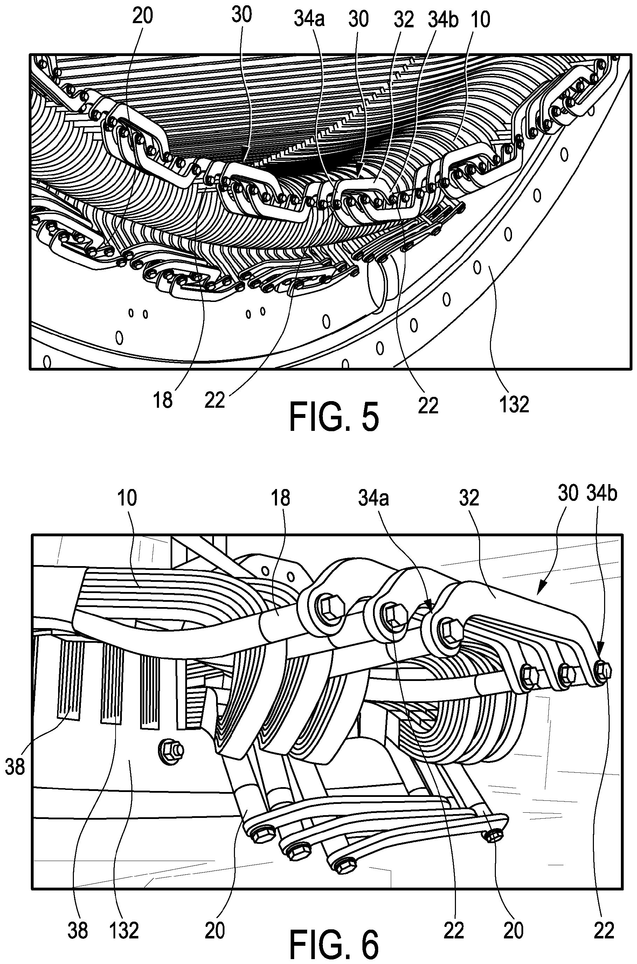

Fig. 5 zeigt eine perspektivische Ansicht eines Stators 132 eines Generators 130 einer Windenergieanlage 100 mit Formspulen 10. Die Formspulen 10 weisen jeweils einen ersten Anschluss 18 und einen zweiten Anschluss 20 auf. Die ersten Anschlüsse 18 der Formspulen 10 sind jeweils mit ersten Anschlüssen 18 anderer Formspulen 10 verbunden. Gleiches gilt für die zweiten Anschlüsse 20 der Formspulen 10.

Die Verbindungen sind durch Verbindungselemente 30 hergestellt. Die Verbindungselemente 30 können auch Verbindungslaschen genannt werden. Die Verbindungselemente 30 umfassen jeweils eine Flachstange 32, die an ihrem Ende 34a, 34b jeweils einen Durchbruch aufweist. Diese Durchbrüche sind gemäß der Darstellung nicht erkennbar, da Schrauben 22 durch die Durchbrüche in die Anschlüsse 18, 20 eingeschraubt sind. Die Flachstangen 32 weisen eine U-Form auf, sodass jeder sechste erste Anschluss 18 und jeder sechste zweite Anschluss 20 durch ein derartiges Verbindungselement 30 verbunden ist, ohne dass das Verbindungselement 30 in Berührung mit anderen Anschlüssen 18, 20, die nicht miteinander verbunden werden sollen, steht. Daher sind die Verbindungselemente 30 nicht isoliert.

Ferner ist erkennbar, dass die Verbindungselemente 30 in verschiedenen Ebenen angeordnet sind. Dies ist möglich, da die Anschlüsse 18, 20 benachbarter Formspulen 10 unterschiedlich weit hervorstehen.

Die Verbindungselemente 30, die mit den zweiten Anschlüssen 20 verbunden sind, weisen Durchbrüche auf, die weiter voneinander beabstandet sind als die Durchbrüche der Verbindungselemente 30, die mit dem ersten Anschluss 18 verbunden sind. Dies liegt daran, dass - ausgehende von einem Zentrum des Stators 132 aus - die zweiten Anschlüsse 20 auf einem größeren Radius liegen als die ersten Anschlüsse 18.

Ferner sind die Flachstangen 32 der Verbindungselemente 30 gekröpft oder leicht abgewinkelt, damit die Schrauben 22 sauber in die Gewinde der zweiten Anschlüsse 20 eingreifen können.

Fig. 6 zeigt einen exemplarischen Aufbau eines Stators 132, in dessen Nuten 38 sechs Formspulen 10 eingesetzt sind. Die Formspulen 10 sind mittels Verbindungselementen 30 miteinander verbunden. Hier sei darauf hingewiesen, dass die elektrische Verbindung nur zu Testzwecken der Herstellung der Schraubverbindung hergestellt ist. Die Verschaltung der Spulen im späteren Einsatz unterscheidet sich von der dargestellten Schaltung und ist demnach nur exemplarisch. Bei der in Fig. 6 dargestellten Verschaltung handelt es sich nämlich um einen in sich geschlossenen Strang, also einen Kurzschluss. Alle zwölf Anschlüsse der sechs Spulen sind nämlich miteinander verbunden.

In den Nuten 38, die nicht mit Formspulen 10 belegt sind, ist im linken Bereich der Figur auch die geblechte Ausführung des Stators 132 zu erkennen.

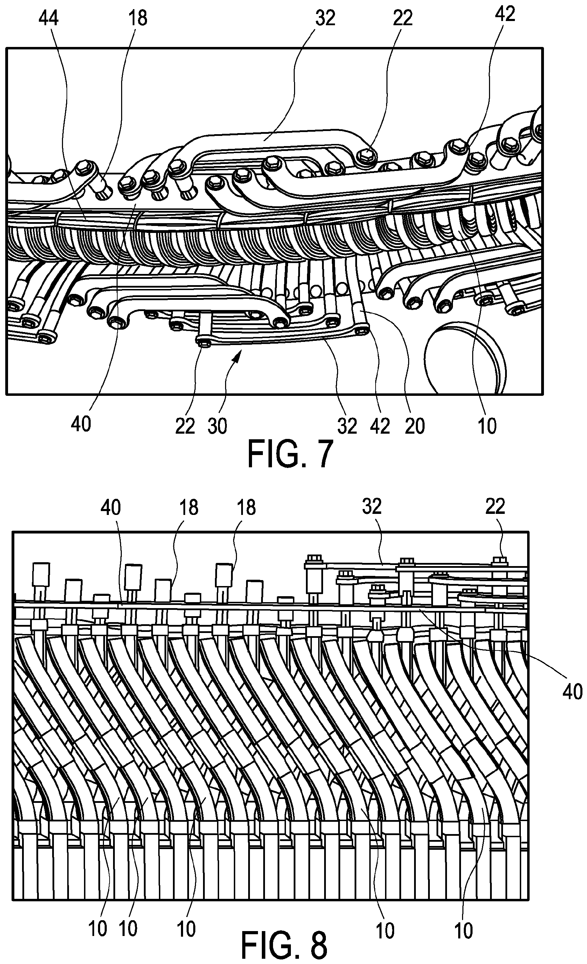

Fig. 7 zeigt eine ähnliche Darstellung wie Fig. 5, wobei nun ein Ausschnitt vergrößert dargestellt ist. Wieder sind die Formspulen 10 zu erkennen, die jeweils einen ersten Anschluss 18 sowie einen zweiten Anschluss 20 aufweisen. Die ersten Anschlüsse 18 weisen einen Abstandshalter 40 auf. Der Abstandshalter 40 der Vermeidung von Kurzschlüssen, damit sich nämlich benachbarte erste Anschlüsse 18 durch Vibrationen nicht berühren.

Ferner ist erkennbar, dass benachbarte Formspulen unterschiedlich lang hinausragende Anschlüsse 18, 20 aufweisen. Hierdurch ergibt sich ein sägezahnartiger Verlauf der Höhen der Anschlüsse 18, 20. Die Verbindungselemente 30 weisen gemäß dem dargestellten Ausführungsbeispiel neben der Flachstange 32 sowie den Schrauben 22 Scheiben 42 auf, die die Kraftverteilung der Schraube 22 auf die Flachstange 32 beim Einschrauben in das Gewinde der Anschlüsse 18, 20 verbessern. Demnach weist ein Verbindungselement 30 gemäß einem bevorzugten Ausführungsbeispiel eine Flachstange 32, zwei Schrauben 22 sowie zwei Scheiben 42 auf.

Die Abstandshalter 40 entsprechen einer Kunststoffleiste mit mehreren Bohrungen, durch die mehrere Anschlüsse 18, 20 beabstandet durchgeführt werden, bevor die Verbindungselemente 30 angebracht werden. Ferner ist noch ein Bündel von Datenleitungen 44 dargestellt, mit dem zum Beispiel Temperatursensoren mit einer Auswertevorrichtungen verbunden sind.

Fig. 8 zeigt eine Seitenansicht aus dem Zentrum des Stators auf die Formspulen 10. Hier ist das zuvor genannte sägezahnartige Profil der Anschlüsse 18, 20, hier der ersten Anschlüsse 18, besonders gut zu erkennen. In der linken Hälfte des Bildes sind erste Anschlüsse 18 erkennbar, die nicht mit Verbindungselementen 30 mit anderen Anschlüssen 18 verbunden sind. Diese Anschlüsse 18 dienen demnach als Anschlüsse zur Verbindung mit nicht dargestellten Generatorklemmen.

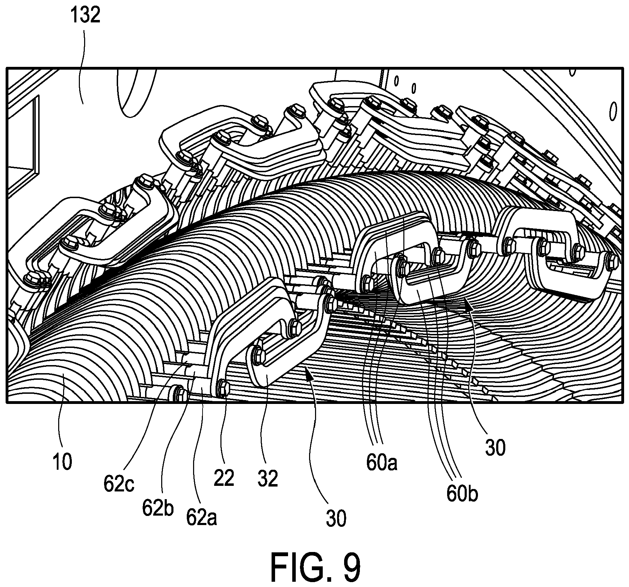

Fig. 9 zeigt eine weitere perspektivische Ansicht eines Stators 132. Gleiche Bezugsziffern bezeichnen gleiche Merkmale. In Fig. 9 ist die Anordnung der Verbindungselemente 30 in Gruppen 60a, 60b dargestellt. Die leitenden Verbinder 32 der Verbindungselemente 30 weisen eine U-Form auf und die Formspulen 10 sind in drei verschiedenen Formen mit drei unterschiedliche langen Anschlussbereichen 62a bis 62c vorsehen, sodass die Verbindungselemente 30 in dreier Gruppen 60a, 60b, angeordnet sind.

Die Enden der gleichen Seite von U-förmigen leitenden Verbindern 32 einer Gruppe 60b sind zwischen die Enden beider Seiten von U-förmigen leitenden Verbindern 32 einer anderen Gruppe 60a angeordnet. In axialer Richtung kann der Stator daher mit besonders geringerem Platzbedarf realisiert werden.

## Patentansprüche

1. Wicklungsaufbau eines Stators (132) eines Generators (130) einer Windenergieanlage (100), umfassend:
- mehrere Formspulen (10), wobei die Formspulen (10) jeweils
- einen elektrischen Leiter (26) mit einem ersten Anschluss (18) und einem zweiten Anschluss (20) und die Anschlüsse (18,20) jeweils ein Gewinde aufweisen und
- der Wicklungsaufbau mehrere Verbindungselemente (30) jeweils zum elektrischen Verbinden von zwei Anschlüssen (18,20) zweier Formspulen (10) durch Schraubverbindungen umfasst, wobei leitende Verbinder (32) der Verbindungselemente eine U-Form aufweisen, wobei die Verbindungselemente (30) in Gruppen (60a, 60b), insbesondere in dreier Gruppen (60a, 60b), angeordnet sind und Enden der gleichen Seite von U-förmigen leitenden Verbindern (32) einer Gruppe (60b) zwischen Enden beider Seiten von U-förmigen leitenden Verbindern (32) der anderen Gruppe (60a) angeordnet und mit den Formspulen (10) verbunden sind und wobei Öffnungen der "U"'s der leitenden Verbinder aufeinanderfolgender Gruppen (60a, 60b) in Umlaufrichtung abwechselnd zum Zentrum des Generators oder vom Zentrum weg zeigen.

2. Wicklungsaufbau nach Anspruch 1,
wobei die Formspulen (10) derart miteinander verbunden sind, dass der Wicklungsaufbau sechsphasig ist, wobei insbesondere ein erster und ein zweiter Strang einer ersten Phase, ein dritter und ein vierter Strang einer zweiten Phase und ein fünfter und ein sechster Strang einer dritten Phase zugeordnet sind und/oder
der Wicklungsaufbau in mehrere, insbesondere, 2, 4, 6, oder 8, Segmente geteilt ist und gleiche Phasen jedes Segments miteinander parallel geschaltet sind.

3. Wicklungsaufbau nach einem der Ansprüche 1 oder 2,
wobei die Anschlüsse zweier Formspulen (10) mit Verbindungselementen (30) verbunden sind und die Verbindungselemente jeweils einen leitenden Verbinder (32), insbesondere eine Kupferflachstange oder ein Kupferband, mit zwei Durchbrüchen sowie zwei Schrauben (22), insbesondere Messingschrauben umfassen und/oder
die Verbindungselemente (30) sowie die Formspulen (10) einen im Wesentlichen gleichen Wärmeausdehnungskoeffizienten aufweisen.

4. Wicklungsaufbau nach einem der vorhergehenden Ansprüche,
wobei die Formspule (10) mehrere Windungen des Leiters (26) aufweist.

5. Wicklungsaufbau nach einem der vorhergehenden Ansprüche,
wobei der Generator (130) ein Ringgenerator ist.

6. Wicklungsaufbau nach einem der vorhergehenden Ansprüche,
wobei das Gewinde der Anschlüsse (18, 20) ein Innengewinde ist.

7. Wicklungsaufbau nach einem der vorhergehenden Ansprüche,
wobei zumindest einer der Anschlüsse (18, 20) der Formspule (10) bezogen auf eine Spulenlängsachse (24) oder eine Parallele zur Spulenlängsachse (24) abgewinkelt ist und/oder der andere Anschluss (18, 20) bezogen auf eine Spulenlängsachse (24) oder eine Parallele zur Spulenlängsachse (24) nicht abgewinkelt ist.

8. Wicklungsaufbau nach einem der vorhergehenden Ansprüche,
wobei der Leiter (26) mehrere Lagen, insbesondere zwei Lagen, aufweist und die mehreren Lagen jeweils mit jedem Anschluss (18, 20) verbunden sind und der Leiter (26) insbesondere eine Kupferflachstange, ein Kupferband oder ein Kupferflachdraht ist und/oder die Formspule (10) vier Windungen des Leiters (26), aufweist und/oder die Formspule (10) mindestens drei unterschiedliche Formen annehmen kann, wobei die Anschlüsse (18, 20) der unterschiedlichen Formen unterschiedliche Entfernungen zu einem geometrischen Mittelpunkt der Formspule (10) aufweisen.

9. Wicklungsaufbau nach einem der vorhergehenden Ansprüche,
wobei der Leiter (26) oder jede Lage des Leiters (26) der Formspule (10) eine Isolierung, insbesondere mittels Lack und/oder Pulverbeschichtung, aufweist und/oder die Anschlüsse (18, 20) mittels Löten oder Schweißen, insbesondere Induktionsschwei-ßen, mit dem Leiter (26) verbunden ist.

10. Wicklungsaufbau nach einem der vorhergehenden Ansprüche,
wobei der Leiter (26) im Bereich der Verbindung mit zumindest einem Anschluss (18, 20) eine Isolierung aus glasfaserverstärktem Kunststoff (28) zur Isolierung zumindest eines Teils des Leiters (26) und/oder eines Teils des Anschlusses (18,20) umfasst und/oder der oder die Anschlüsse (18,20) Abstandshalter (40) aufweisen und/oder der Leiter (26) und die Anschlüsse (18, 20) mit Kupfer oder einer Kupferlegierung gefertigt sind.

11. Stator eines Generators (130) einer Windenergieanlage (100), umfassend:
- mehrere umlaufende Nuten (38), wobei jeweils benachbarte Nuten (38) einen im Wesentlichen gleichen Abstand zueinander aufweisen,
- mehrere Formspulen (10) und den Wicklungsaufbau nach einem der Ansprüche 1 bis 10, wobei die Formspulen (10) in die Nuten (38) eingesetzt sind.

## Claims

1. A winding structure of a stator (132) of a generator (130) of a wind power installation (100), comprising:
- multiple form-wound coils (10), wherein the form-wound coils (10) each
- have an electrical conductor (26) with a first terminal (18) and with a second terminal (20) and the terminals (18, 20) in each case have a thread, and
- the winding structure comprises multiple connecting elements (30) in each case for the electrical connection of two terminals (18, 20) of two form-wound coils (10) by means of screw connection, wherein the conductive connection (32) of the connecting elements have a U-shape, wherein the connecting elements (30) are arranged in groups (60a, 60b), in particular in groups of three (60a, 60b), and ends of the same side of U-shaped conductive connectors (32) of one group (60b) are arranged between the ends of two sides of U-shaped conductive connectors of another group and are connected to the form-wound coils (10), wherein the openings of the "U"'s of the conductive connectors of successive groups (60a, 60b) point alternatively in the circumferential direction towards the center of the generator or away from the center.

2. The winding structure according to claim 1,
wherein the form-wound coils (10) are interconnected such that the winding structure is of six-phase configuration, wherein, in particular, a first and a second strand are assigned to a first phase, a third and a fourth strand are assigned to a second phase, and a fifth and a sixth strand are assigned to a third phase and/or
the winding structure is divided into multiple, in particular 2, 4, 6 or 8, segments and identical phases of each segment are connected in parallel with one another.

3. The winding structure according to claim 1 or 2,
wherein the terminals of two form-wound coils (10) are connected by means of connecting elements (30), and the connecting elements comprise in each case one conductive connector (32), in particular a copper flat bar or a copper strip, with two apertures and two screws (22), in particular brass screws, and/or
the connecting elements (30) and the form-wound coils (10) have a substantially identical coefficient of thermal expansion.

4. The winding structure according to any of the previous claims,
wherein the form-wound coil (10) has multiple windings of the conductor (26).

5. The winding structure according to any of the previous claims,
wherein the generator (130) is a ring generator.

6. The winding structure according to any of the previous claims,
wherein the thread of the connections (18, 20) is an internal thread.

7. The winding structure according to any of the previous claims,
wherein at least one of the terminals (18, 20) of the form-wound coil (10) is angled in relation to a coil longitudinal axis (24) or in relation to a line parallel to the coil longitudinal axis (24) and/or the other terminal (18, 20) is not angled in relation to a coil longitudinal axis (24) or in relation to a line parallel to the coil longitudinal axis (24).

8. The winding structure according to any of the previous claims,
wherein the conductor (26) has multiple layers, in particular two layers, and the multiple layers are in each case connected to each terminal (18, 20), and the conductor (26) is in particular a copper flat bar, a copper strip or a copper flat wire and/or
the form-wound coil (10) has four windings of the conductor (26) and/or
the form-wound coil (10) can take at least three different forms, wherein the terminals (18, 20) of the different forms are at different distances from a geometrical central point of the form-wound coil (10).

9. The winding structure according to any of the previous claims,
wherein the conductor (26) or each layer of the conductor (26) of the form-wound coil (10) has an insulation, in particular by means of lacquer and/or powder coating, and/or
the terminals (18, 20) are connected to the conductor (26) by means of soldering or welding, in particular induction welding.

10. The winding structure according to any of the previous claims,
wherein the conductor (26) in the region of the connection to at least one terminal (18, 20) has an insulation composed of glass-fiber-reinforced-plastic (28) for insulating at least a part of the conductor (26) and/or a part of the terminal (18, 20) and/or the one or more terminals (18, 20) have spacers (40) and/or
the conductor (26) and the terminals (18, 20) are manufactured with copper or a copper alloy.

11. A stator of a generator (130) of a wind power installation (100), comprising:
- multiple encircling grooves (38), wherein respectively adjacent grooves (38) have a substantially equal spacing to one another,
- multiple form-wound coils (10) and a winding structure as claimed in any of the claims 1 to 10, wherein the form-wound coils (10) are inserted into the grooves (38).

## Revendications

1. Structure de bobinage d'un stator (132) d'un générateur (130) d'une éolienne (100), comprenant :
- plusieurs bobines préformées (10), dans laquelle les bobines préformées (10) présentent respectivement
- un conducteur électrique (26) avec une première borne (18) et une deuxième borne (20) et les bornes (18, 20) présentent respectivement un filetage et
- la structure de bobinage comprend plusieurs éléments de raccordement (30) destinés respectivement au raccordement électrique de deux bornes (18, 20) de deux bobines préformées (10) par des raccordements par vissage, dans laquelle
des connecteurs (32) conducteurs des éléments de raccordement présentent une forme en U, dans laquelle les éléments de raccordements (30) sont disposés dans des groupes (60a, 60b), en particulier dans trois groupes (60a, 60b),
et
des extrémités du même côté de connecteurs conducteurs (32) en forme de U d'un groupe (60b) sont disposées entre des extrémités de deux côtés de connecteurs conducteurs (32) en forme de U de l'autre groupe (60a) et sont raccordées aux bobines préformées (10) et dans laquelle des ouvertures des U des connecteurs conducteurs de groupes (60a, 60b) se suivant les uns les autres pointent en alternance dans la direction périphérique vers le centre du générateur ou de manière à s'éloigner du centre.

2. Structure de bobinage selon la revendication 1,
dans laquelle les bobines préformées (10) sont raccordées les unes aux autres de telle manière que la structure de bobinage est hexaphasée, dans laquelle en particulier un premier et un deuxième faisceau sont associés à une première phase, un troisième et un quatrième faisceau sont associés à une deuxième phase et un cinquième et un sixième faisceau sont associés à une troisième phase, et/ou
la structure de bobinage est divisée en plusieurs, en particulier en 2, 4, 6 ou 8, segments et des phases identiques de chaque segment sont branchées en parallèle les uns avec les autres.

3. Structure de bobinage selon l'une quelconque des revendications 1 ou 2,
dans laquelle les bornes de deux bobines préformées (10) sont raccordées à des éléments de raccordement (30) et les éléments de raccordement comprennent respectivement un connecteur conducteur (32), en particulier une tige plate en cuivre ou une bande en cuivre, avec deux ajours ainsi que deux vis (22), en particulier des vis en laiton, et/ou
les éléments de raccordement (30) ainsi que les bobines préformées (10) présentent un coefficient de dilatation thermique sensiblement identique.

4. Structure de bobinage selon l'une quelconque des revendications précédentes,
dans laquelle la bobine préformée (10) présente plusieurs spires du conducteur (26).

5. Structure de bobinage selon l'une quelconque des revendications précédentes,
dans laquelle le générateur (130) est un générateur annulaire.

6. Structure de bobinage selon l'une quelconque des revendications précédentes,
dans laquelle le filetage des bornes (18, 20) est un filetage intérieur.

7. Structure de bobinage selon l'une quelconque des revendications précédentes,
dans laquelle au moins une des bornes (18, 20) de la bobine préformée (10) est coudée par rapport à un axe longitudinal de bobine (24) ou à une parallèle par rapport à l'axe longitudinal de bobine (24), et/ou l'autre borne (18, 20) n'est pas coudée par rapport à un axe longitudinal de bobine (24) ou à une parallèle par rapport à l'axe longitudinal de bobine (24).

8. Structure de bobinage selon l'une quelconque des revendications précédentes,
dans laquelle le conducteur (26) présente plusieurs couches, en particulier deux couches, et les plusieurs couches sont raccordées à chaque borne (18, 20) et le conducteur (26) est en particulier une tige plate en cuivre, une bande en cuivre ou un fil plat en cuivre, et/ou
la bobine préformée (10) présente quatre spires du conducteur (26), et/ou
la bobine préformée (10) peut prendre au moins trois formes différentes, dans laquelle les bornes (18, 20) des différentes formes présentent différents éloignements par rapport à un point central géométrique de la bobine préformée (10).

9. Structure de bobinage selon l'une quelconque des revendications précédentes,
dans laquelle le conducteur (26) ou chaque couche du conducteur (26) de la bobine préformée (10) présente une isolation, en particulier au moyen de vernis et/ou de revêtement de poudre, et/ou
les bornes (18, 20) sont raccordées au conducteur (26) par brasage ou soudage, en particulier par soudage par induction.

10. Structure de bobinage selon l'une quelconque des revendications précédentes,
dans laquelle le conducteur (26) comprend, dans la zone du raccordement à au moins une borne (18, 20), une isolation en matière plastique renforcée par des fibres de verre (28) pour l'isolation d'au moins une partie du conducteur (26) et/ou d'une partie de la borne (18, 20) et/ou la ou les bornes (18, 20) présente(nt) des écarteurs (40), et/ou
le conducteur (26) et les bornes (18, 20) sont fabriqués avec du cuivre ou un alliage de cuivre.

11. Stator d'un générateur (130) d'une éolienne (100), comprenant :
- plusieurs rainures périphériques (38), dans lequel des rainures (38) respectivement adjacentes présentent une distance sensiblement identique les unes par rapport aux autres,
- plusieurs bobines préformées (10) et la structure de bobinage selon l'une quelconque des revendications 1 à 10, dans lequel les bobines préformées (10) sont insérées dans les rainures (38).
